# FASCICULE DE BREVET EUROPEEN

(11) **EP 1 930 113 B1**
(45) Date de publication et mention de la délivrance du brevet: **08.08.2012**
(21) Numéro de dépôt: 07291393.2
(22) Date de dépôt: 23.11.2007
(51) Int. Cl.: B23K 26/073, H01M 2/36, B23K 26/20

(54) **Procédé de soudure par laser à optique annulaire**
Schweißverfahren durch einem Laser mit einer optischen Ringvorrichtung
Ring optics laser welding process

(30) Priorité: 08.12.2006 FR 0610709
(43) Date de publication de la demande: 11.06.2008
(73) Titulaire: SAFT, 93170 Bagnolet (FR)
(72) Inventeur: Sciara, Olivier, 86240 Fontaine le Comte (FR)
(74) Mandataire: Hirsch & Associés

(56) Documents cités:
- EP-A- 0 497 064
- GB-A- 2 067 449
- US-A1- 2002 139 781
- US-A1- 2006 057 462

## Description

### DOMAINE TECHNIQUE

Le domaine technique de l'invention est celui des procédés de soudure de métaux.

### ETAT DE LA TECHNIQUE

La présente invention se rapporte à un procédé de soudure accumulateur selon le préambule de la revendication 1.

Un accumulateur étanche ou générateur électrochimique étanche (ces deux termes étant équivalents, on utilisera le terme d'accumulateur dans la présente description) comprend de façon connue en soi un faisceau électrochimique comportant une alternance d'électrodes positives et négatives encadrant des séparateurs. Le faisceau électrochimique est disposé dans un conteneur. Il est imprégné d'un électrolyte. L'accumulateur est fermé de manière étanche par un couvercle.

Le couvercle comprend généralement une paroi comportant une ouverture (orifice) grâce à laquelle l'accumulateur peut être rempli d'électrolyte. Après remplissage, il est courant de rendre étanche l'accumulateur en obstruant l'ouverture du couvercle. Ceci peut être réalisé en plaçant sur cette ouverture une bille en inox et en la soudant sur l'ouverture par soudure électrique.

La paroi du couvercle peut être en aluminium. Or, dans ce cas, la soudure d'une bille en inox sur une paroi en aluminium par les procédés de soudure connus ne donne pas de bons résultats. D'autre part, l'association de l'aluminium avec l'inox est déconseillée lorsque ces deux métaux sont en contact d'un même électrolyte. On préfère donc utiliser une bille en aluminium que l'on soude sur la paroi en aluminium du couvercle.

Les procédés connus de soudure d'une bille sur une paroi d'un couvercle l'accumulateur ne permettent pas de garantir l'étanchéité de l'accumulateur. En effet, il arrive souvent que la bille se déplace au moment de la soudure. De ce fait, elle n'est plus centrée sur l'ouverture et l'étanchéité de la soudure n'est pas de bonne qualité. La répétabilité du procédé de soudure est également médiocre.

On recherche donc un procédé de soudure d'une bille sur la paroi d'un couvercle d'un accumulateur qui permettrait d'améliorer étanchéité de la soudure.

### RESUME DE L'INVENTION

A cet effet, l'invention propose un procédé de soudure comprenant les étapes consistant à :
a) disposer une bille au contact de la périphérie d'une ouverture pratiquée à travers une pièce métallique,
b) souder la bille sur la périphérie de l'ouverture en utilisant un laser émettant un faisceau de section annulaire.

Selon un mode de réalisation, la bille est en aluminium.

Selon un autre mode de réalisation, la bille est en inox.

Selon un mode de réalisation, la pièce métallique est en aluminium.

Selon un mode préféré de réalisation, la bille est préformée par soudure électrique avant la soudure de l'étape b).

Selon un mode préféré de réalisation, l'étape b) est réalisée au moins deux fois.

Selon un mode préféré de réalisation, l'étape b) est réalisée deux fois.

L'invention concerne également un procédé de fabrication d'un accumulateur comprenant une étape de soudure d'une bille sur un couvercle d'un accumulateur par le procédé de soudure décrit ci-dessus. Ce procédé permet de rendre étanche l'accumulateur.

Selon un mode de réalisation, la bille et le couvercle sont en aluminium et sont en contact avec un électrolyte.

Enfin, l'invention concerne également un accumulateur comprenant un conteneur et un couvercle avec une bille soudée sur la périphérie d'une ouverture pratiquée à travers le couvercle, la bille étant susceptible d'être soudée par le procédé de soudure décrit ci-dessus.

L'accumulateur comprend un conteneur et un couvercle avec une bille soudée sur la périphérie d'une ouverture pratiquée à travers le couvercle, la surface supérieure de la bille présentant un creux en son centre et un renflement de forme circulaire.

### BREVE DESCRIPTION DES FIGURES

La Figure 1 représente une vue en coupe d'une bille reposant sur la périphérie d'une ouverture pratiquée à travers la paroi d'une pièce métallique avant soudure.
La Figure 2 représente un schéma de principe d'un tir de faisceau laser à optique annulaire sur une bille devant être soudée sur une pièce métallique.
La Figure 3 représente une vue en coupe longitudinale d'une bille préformée par soudage électrique sur un orifice d'une pièce métallique.
La Figure 4 représente une vue en coupe d'une bille soudée sur la périphérie d'une ouverture pratiquée à travers la paroi d'une pièce métallique. La bille a été simplement posée sur la périphérie de l'ouverture avant application du tir laser.
La Figure 5 représente une vue en coupe d'une bille soudée sur la périphérie d'une ouverture pratiquée à travers la paroi d'une pièce métallique. La bille a été préalablement forgée par soudure électrique pour prendre la forme de l'ouverture avant application du tir laser.
La Figure 6 représente une vue en coupe longitudinale d'un accumulateur dont le couvercle comprend un orifice obstrué par une bille, cette bille ayant été soudée sur l'orifice par le procédé de soudure selon l'invention.

### EXPOSE DETAILLE DES MODES DE REALISATION

Les étapes du procédé de soudure vont maintenant être décrites.

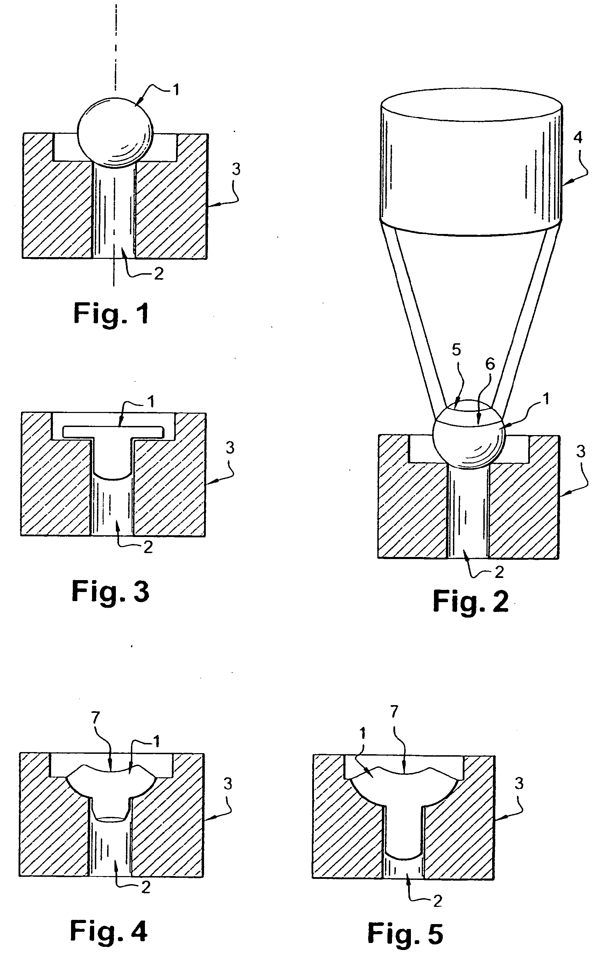

Dans une première étape, on pose la bille à souder au contact de la périphérie d'une ouverture pratiquée à travers une pièce métallique servant de support. La Figure 1 représente la bille et la pièce métallique vue en coupe longitudinale. La bille (1) repose sur la périphérie d'une ouverture (2) pratiquée à travers la pièce métallique servant de support (3).

Le matériau de la bille peut être par exemple de l'inox ou de l'aluminium. De préférence, la bille est en aluminium. On peut par exemple choisir l'aluminium 1050 (pureté supérieure à 99,5% d'aluminium).

La pièce métallique servant de support peut être en aluminium, par exemple l'aluminium 3003 (aluminium contenant entre 1 et 1.5% de manganèse et de 0,5 à 0.20% de cuivre comme éléments d'alliages).

Dans un mode préféré de réalisation, la bille et la pièce métallique sont en aluminium.

Le diamètre de la bille n'entre pas dans des limites spécifiques ; il peut être par exemple inférieur à 2 mm. Le diamètre de l'ouverture n'entre pas non plus dans des limites spécifiques : il peut par exemple être inférieur à 1,5 mm. De préférence, on choisira le diamètre de la bille et le diamètre de l'ouverture de façon à ce que le rapport du diamètre de la bille sur le diamètre de l'ouverture soit compris entre 1,1 et 2,2.

Dans une seconde étape, on réalise au moins un tir de faisceau laser à optique annulaire. Le faisceau laser est dit annulaire car la projection sur un plan de la surface de la bille irradiée par le faisceau laser, a la forme d'un anneau. La Figure 2 représente un schéma de principe d'un tir de faisceau laser à optique annulaire (4) sur une bille (1) devant être soudée sur une pièce métallique (3). La surface comprise entre le diamètre interne (5) et le diamètre externe (6) de l'anneau correspond à la surface irradiée par le faisceau laser.

L'invention réside dans la découverte que l'utilisation d'un faisceau laser à optique annulaire empêche le déplacement de la bille sur l'ouverture. En effet, dans un tir de faisceau à optique annulaire, aucune énergie n'est appliquée sur le centre de la bille. De ce fait, la bille n'est pas chassée de son emplacement ; elle peut être soudée sur l'ouverture sans risque d'être déplacée.

De préférence, l'étape de soudure comprend au moins deux tirs lasers. Ils peuvent être réalisés à une fréquence de 2,8 Hz (2,8 tirs par seconde). La répétition des tirs laser permet d'améliorer la qualité de la soudure.

De préférence, le laser est de type Nd-YAG. On pourra par exemple utiliser un laser de type TRUMPF 304P (300 W pulsé) possédant une fibre optique de 400 µm de diamètre, ou plus si besoin : 600 ou 1000 µm. Le gaz de protection est dans ce cas par exemple de l'argon. On pourra utiliser d'autres gaz neutres : hélium, azote ou un mélange constitué de ces différents gaz, circulant à un débit de par exemple 10L/min. La focale est fixe, par exemple, de 100 mm. L'optique est une optique annulaire.

La puissance de tir doit être adaptée aux dimensions de la bille à souder. Lorsque celle-ci a un diamètre d'environ 1,5 mm, la puissance crête est d'environ 6 kW et la durée du tir laser est d'environ 12 ms. L'énergie délivrée est d'environ 72 J. La puissance moyenne est de 72 W avec 1 tir et de 201 W pour deux tirs successifs à une fréquence de 2,8 Hz

On peut faire varier la défocalisation afin de faire varier la largeur du faisceau laser. Le faisceau laser doit être suffisamment large pour obtenir une soudure de solidité suffisante.

Selon un mode de réalisation, le défocalisation est de + 4mm. La défocalisation sert à ajuster la largeur de l'anneau de soudure suivant le plan focal.

De préférence, la bille est préformée par soudure électrique avant l'étape de soudure par laser à optique annulaire. Le préformage consiste à soumettre la bille à une pression et à appliquer un courant électrique à travers celle-ci de façon à la déformer et à provoquer son insertion partielle dans l'ouverture. Le préformage correspond à un forgeage à chaud. La Figure 3 représente une vue en coupe longitudinale d'une bille (1) préformée dans une ouverture (2) d'une pièce métallique servant de support. Le préformage par soudure électrique avant l'étape de soudure laser permet de modifier la forme de la bille afin qu'elle épouse la forme de l'ouverture. Le préformage permet donc de stabiliser la position de la bille avant soudure et d'améliorer l'étanchéité de la soudure et la répétabilité du procédé de soudure. Cet avantage est mis en évidence en comparant la Figure 5 avec la Figure 4. Dans ces deux figures, la section longitudinale de l'ouverture (2) a la forme d'un T. La branche verticale et la branche horizontale du T correspondent à deux sections de l'ouverture de diamètres différents. La bille de la figure 4 a été soudée sans préformage sur l'ouverture alors que la bille de la figure 5 l'a été avec une étape préalable de préformage. On constate que la surface de contact entre la bille et l'ouverture est plus réduite sur la figure 4 que sur la figure 5. que ce soit dans la branche horizontale du T ou dans sa branche verticale. La bille de la Figure 5 s'adapte parfaitement au contour de l'ouverture. Ceci est d'un intérêt lorsqu'il s'agit de rendre étanche un conteneur contenant des produits présentant un risque pour l'environnement et les personnes situées à proximité.

Le procédé selon l'invention permet de rendre étanche le conteneur au niveau de la soudure. (fuite admise inférieure à 10⁻⁷ cm³/s sous 1 bar d'hélium).
Dans un mode de réalisation particulièrement préféré, la bille est préformée par soudure électrique puis on réalise deux tirs successifs de faisceau laser à optique annulaire.

La bille soudée par le procédé selon l'invention possède une forme caractéristique. La surface supérieure de la bille présente en effet un creux (7) en son centre et un renflement de forme circulaire situé sur la surface de la bille irradiée par le faisceau laser. Ce renflement est dû à la dilatation du métal de la bille sous l'effet du dégagement de chaleur produit par l'impact du faisceau laser. La partie centrale de la bille n'est pas déformée car elle ne reçoit pas la chaleur du rayon laser. Cette déformation est caractéristique d'une soudure réalisée à l'aide d'un laser à optique annulaire. Elle n'est pas obtenue dans un procédé de soudure électrique traditionnel, ni laser traditionnel.

Le procédé selon l'invention est utilisé pour fermer de manière étanche un accumulateur. Jusqu'à présent les procédés de soudure d'une bille sur un couvercle d'accumulateur ne donnaient pas de résultats satisfaisants. Le procédé par soudage laser avec optique annulaire permet d'obtenir une soudure présentant une étanchéité satisfaisante.

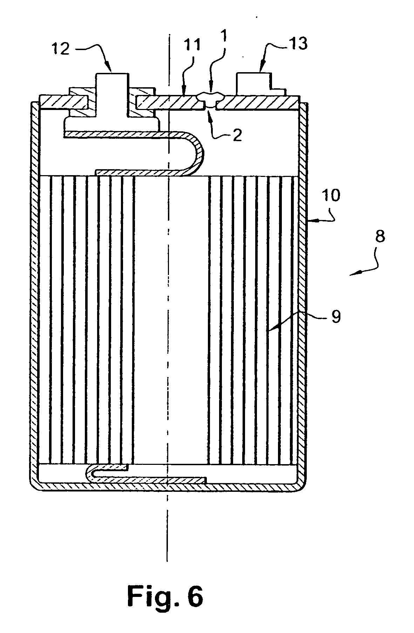

On fait référence à la figure 6 qui représente une vue en coupe longitudinale d'un accumulateur (8) dont le couvercle (11) comprend un orifice obstrué par une bille (1) selon le procédé de l'invention.

De façon classique, on introduit le faisceau électrochimique (9) dans un conteneur (10). On place un couvercle (11) sur l'extrémité ouverte de ce conteneur. Ce couvercle peut supporter une ou deux bornes de sortie de courant (12) et (13). Il est également muni d'une ouverture (ou orifice) (2) grâce à laquelle on introduit un électrolyte dans le conteneur. Une fois le conteneur de l'accumulateur rempli, on pose une bille sur l'orifice pour l'obstruer. On ferme l'accumulateur de manière étanche en soudant la bille sur l'orifice par le procédé de soudure selon l'invention. Un des avantages du procédé selon l'invention est qu'il est possible de réaliser une soudure d'une bille en aluminium sur un couvercle de l'accumulateur en aluminium même si de l'électrolyte est en contact avec la surface interne du couvercle et la bille en aluminium.

Pour un accumulateur alcalin, l'électrolyte est une solution aqueuse alcaline concentrée comprenant au moins un hydroxyde (KOH, NaOH, LiOH), en une concentration généralement de l'ordre de plusieurs fois la normalité.

Pour un accumulateur lithium-ion, le solvant est un solvant organique dans lequel un sel de lithium est dissous. Le solvant organique peut être choisi dans le groupe des carbonates cycliques, des carbonates linéaires ou des esters linéaires ou un mélange de ceux-ci. Le sel utilisé est un sel de lithium pouvant être choisi parmi les sels suivants : LiPF₆, LiBF₄, LiBOB (lithium Bis oxalatoborate), LIBETI (lithium bisperfluoroethylsulfonylimide) ou un mélange de ceux-ci.

De manière préférée, on nettoie la périphérie de l'orifice de remplissage avant soudure pour enlever les traces d'électrolyte.

De manière préférée, on réalise deux soudures successives. Une fréquence de 2,8 Hz est jugée suffisante.

Le procédé selon l'invention peut s'appliquer pour obturer un générateur électrochimique primaire ou secondaire. Le format du conteneur peut être prismatique (électrode planes) ou cylindrique (électrodes spiralées) ou concentrique (bobine). Le procédé est bien adapté aux accumulateurs lithium-ion.

Le procédé de soudure permet de rendre étanche l'accumulateur au niveau de la soudure. Une étanchéité au test hélium est obtenue car les tests indiquent une fuite inférieure à 10⁻⁷ cm³/s sous 1 bar d'hélium.

## Revendications

1. Procédé de soudure comprenant les étapes consistant à :
a) disposer une bille (1) au contact de la périphérie d'une ouverture (2) pratiquée à travers une pièce métallique (3, 11),
b) souder la bille sur la périphérie de l'ouverture en utilisant un laser **caractérisé en ce que** le laser émet un faisceau de section annulaire (4).

2. Procédé selon la revendication 1, dans lequel la bille est en aluminium.

3. Procédé selon la revendication 1, dans lequel la bille est en inox.

4. Procédé selon l'une quelconque des revendications 1, 2 ou 3, dans lequel la pièce métallique est en aluminium.

5. Procédé selon l'une des revendications précédentes, dans lequel la bille est préformée par soudure électrique avant la soudure de l'étape b).

6. Procédé selon l'une quelconque des revendications précédentes, dans lequel l'étape b) est réalisée au moins deux fois.

7. Procédé selon la revendication 6, dans lequel l'étape b) est réalisée deux fois.

8. Procédé de fabrication d'un accumulateur comprenant une étape de soudure d'une bille sur un couvercle d'un accumulateur par le procédé de soudure selon l'une quelconque des revendications précédentes.

9. Procédé selon la revendication 8, dans lequel la bille et le couvercle sont en aluminium et sont en contact avec un électrolyte.

10. Accumulateur (8) comprenant un conteneur (10) et un couvercle (11) avec une bille (1) soudée sur la périphérie d'une ouverture (2) pratiquée à travers le couvercle, **caractérisé en ce que** la surface supérieure de la bille présente un creux (7) en son centre et un renflement de forme circulaire.

## Claims

1. A welding method comprising the steps consisting of:
a) placing a ball (1) in contact with the periphery of an opening (2) formed through a metal part (3, 11),
b) welding the ball onto the periphery of the opening using a laser **characterized in that** the laser emits a beam with an annular cross-section (4).

2. The method according to claim 1, in which the ball is made of aluminum.

3. The method according to claim 1, in which the ball is made of stainless steel.

4. The method according to any one of claims 1, 2 or 3, in which the metal part is made of aluminum.

5. The method according to one of the preceding claims, in which the ball is preformed by electric welding before the welding of step b).

6. The method according to any one of the preceding claims, in which step b) is carried out at least twice.

7. The method according to claim 6, in which step b) is carried out twice.

8. A method for manufacturing an accumulator comprising a step of welding a ball onto a cover of an accumulator by the welding method according to any one of the preceding claims

9. The method according to claim 8, in which the ball and the cover are made of aluminum and are in contact with an electrolyte.

10. An accumulator (8) comprising a container (10) and a cover (11) with a ball (1) welded onto the periphery of an opening (2) formed through the cover, **characterized in that** the upper surface of the ball has a recess (7) at its center and a bulge of circular shape.

## Patentansprüche

1. Schweißverfahren, umfassend, die folgenden Schritte, darin bestehend:
a) eine Kugel (1) mit der Peripherie einer Öffnung (2) in Kontakt zu bringen, die durch ein Metallstück (3, 11) hindurchgeht,
b) die Kugel auf die Peripherie der Öffnung zu schweißen, wobei ein Laser verwendet wird, **dadurch gekennzeichnet, dass** der Laser einen Strahl mit ringförmigem Querschnitt (4) entsendet.

2. Verfahren nach Anspruch 1, bei dem die Kugel aus Aluminium ist.

3. Verfahren nach Anspruch 1, bei dem die Kugel aus rostfreiem Stahl ist.

4. Verfahren nach einem der Ansprüche 1, 2 oder 3, bei dem das Metallstück aus Aluminium ist.

5. Verfahren nach einem der vorhergehenden Ansprüche, bei dem die Kugel durch Elektroschweißen vor dem Schweißen des Schritts b) vorgeformt wird.

6. Verfahren nach einem der vorhergehenden Ansprüche, bei dem der Schritt b) mindestens zweimal durchgeführt wird.

7. Verfahren nach Anspruch 6, bei dem der Schritt b) zweimal durchgeführt wird.

8. Verfahren zur Herstellung eines Akkumulators, umfassend einen Schritt des Schweißens einer Kugel auf einen Deckel eines Akkumulators durch das Schweißverfahren nach einem der vorhergehenden Ansprüche.

9. Verfahren nach Anspruch 8, bei dem die Kugel und der Deckel aus Aluminium sind und mit einem Elektrolyt in Kontakt sind.

10. Akkumulator (8), umfassend einen Behälter (10) und einen Deckel (11) mit einer Kugel (1), die auf die Peripherie einer Öffnung (2) geschweißt ist, die durch den Deckel hindurchgeht, **dadurch gekennzeichnet, dass** die obere Oberfläche der Kugel einen Hohlraum (7) in ihrer Mitte und eine kreisförmige Verstärkung aufweist.
